(19) **Europäisches Patentamt**
**European Patent Office**
**Office européen des brevets**

(11) **EP 4 625 334 B1**

(12) **EUROPEAN PATENT SPECIFICATION**

(45) Date of publication and mention
of the grant of the patent:
**22.04.2026 Bulletin 2026/17**

(51) International Patent Classification (IPC):
**G06T 11/60** *(2026.01)* **G06N 3/045** *(2023.01)*
**G06V 10/00** *(2022.01)*

(21) Application number: **24187043.5**

(22) Date of filing: **08.07.2024**

(52) Cooperative Patent Classification (CPC):
**G06T 11/60; G06N 3/045;** G06T 2207/20081;
G06T 2207/20084; G06V 40/174

(54) **TEXT GUIDED IMAGE EDITOR**

TEXTGEFÜHRTER BILDEDITOR

EDITEUR D'IMAGES GUIDEES PAR TEXTE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **27.03.2024 IN 202411024596**

(43) Date of publication of application:
**01.10.2025 Bulletin 2025/40**

(73) Proprietor: **FUJITSU LIMITED
Kawasaki-shi, Kanagawa 211-8588 (JP)**

(72) Inventor: **MALIK, Sameer
560037 Bangalore (IN)**

(74) Representative: **Haseltine Lake Kempner LLP
Cheapside House
138 Cheapside
London EC2V 6BJ (GB)**

(56) References cited:
• **HERTZ AMIR ET AL: "Prompt-to-Prompt Image
Editing with Cross Attention Control",
ARXIV.ORG, 2 August 2022 (2022-08-02), pages 1
- 19, XP093228322, Retrieved from the Internet
<URL:https://arxiv.org/pdf/2208.01626>**

• **SAHARIA CHITWAN ET AL: "Photorealistic Text-
to-Image Diffusion Models with Deep Language
Understanding", 23 May 2022 (2022-05-23),
pages 1 - 46, XP093228324, Retrieved from the
Internet <URL:https://arxiv.org/pdf/2205.11487>**
• **HU YE ET AL: "IP-Adapter: Text Compatible
Image Prompt Adapter for Text-to-Image
Diffusion Models", ARXIV.ORG, CORNELL
UNIVERSITY LIBRARY, 201 OLIN LIBRARY
CORNELL UNIVERSITY ITHACA, NY 14853, 13
August 2023 (2023-08-13), XP091591994**
• **HAREESH RAVI ET AL: "PRedItOR: Text Guided
Image Editing with Diffusion Prior", ARXIV.ORG,
CORNELL UNIVERSITY LIBRARY, 201 OLIN
LIBRARY CORNELL UNIVERSITY ITHACA, NY
14853, 20 March 2023 (2023-03-20), XP091463365**
• **DANI VALEVSKI ET AL: "UniTune: Text-Driven
Image Editing by Fine Tuning an Image
Generation Model on a Single Image",
ARXIV.ORG, CORNELL UNIVERSITY LIBRARY,
201 OLIN LIBRARY CORNELL UNIVERSITY
ITHACA, NY 14853, 17 October 2022 (2022-10-17),
XP091346905**

## Description

Field of the Invention

Embodiments of the present invention described herein relate to text guided image editing, and in particular to a computer-implemented method, a computer program, and an information programming apparatus.

Background of the Invention

Text guided image editing refers to methods based on image generation models that make semantic changes to a given image based on textual instructions. Text guided image editing involves using textual descriptions to guide the modification or manipulation of images. This can be achieved through techniques like conditional image generation, image captioning, semantic image editing, interactive interfaces, and content-aware editing. It enables intuitive editing workflows, allows for complex instructions using natural language, and finds applications in graphic design, photo editing, content creation, and computer-aided design. "Prompt-to-Prompt Image Editing with Cross Attention Control", Hertz Amir et al, https://arxiv.org/pdf/2208.01626; and "Photorealistic Text-to-Image Diffusion Models with Deep Language Understanding", Saharia Chitwan et al, https://arxiv.org/ pdf/2205.11487 disclose some similar text guided image editing methods.

It is desirable to be able to control the image editing and preserve the subject of the image's identity.

Summary of the Invention

It is an aim of the present disclosure to at least partially address one or more of the challenges mentioned above. The invention is defined in the independent claims, to which reference should now be made. Further features are set out in the dependent claims.

According to an embodiment of a first aspect there is disclosed herein a computer-implemented method comprising obtaining a base prompt indicating a base image and an edit prompt indicating an edit to be made to the base image. The method further comprising converting the base and edit prompts to base and edit embeddings, respectively. The method further comprising repeating, for a plurality of iterations, the steps of: (i) determining new edit embeddings based on: the base and edit embeddings, a time step relating to the iteration, and a weight dependent on the time step wherein the weight controls mixing of the base and edit embeddings; (ii) inputting the base embeddings into a diffusion model in a base reverse process arranged to update a base latent relating to the base image; and (iii) inputting the new edit embeddings into the diffusion model in an edit reverse process arranged to update an edit latent relating to an edited image, wherein cross-attention maps generated from the diffusion model in the base reverse process are input into the diffusion model in the edit reverse process. The method further comprising converting the edit latent to the edited image; and finally, outputting the edited image.

In some embodiments, the weight is dependent on the time step such that: at earlier time steps, the base and edit embeddings mix less than at later time steps.

In some embodiments, the weight is further dependent on a time invariant parameter which controls how much the base and edit embeddings mix.

In some embodiments, the converting of the base and edit prompts to the base and edit embeddings involves converting the base and edit prompts to base and edit tokens and converting the base and edit tokens to base and edit embeddings.

In some embodiments, the new edit embeddings are further based on a mask vector and an index vector computed based on the base and edit tokens.

In some embodiments, the inputting of the base embeddings into the diffusion model in the base reverse process and the inputting of the new edit embeddings into the diffusion model in the edit reverse process overlap in time.

In some embodiments, the base prompt is derived from an image.

In some embodiments, the base prompt and/or the edit prompt are obtained from a user input.

In some embodiments, the inputting of the base embeddings into the diffusion model in the base reverse process and the inputting of the new edit embeddings into the diffusion model in the edit reverse process may occur simultaneously.

In some embodiments, the base prompt may comprise a textual description relating to the base image.

In some embodiments, the edit prompt may comprise a textual description relating to the edited image.

In some embodiments, the base image may comprise an image of a human face.

In some embodiments, the edit may comprise a change in facial expression of the human face.

In some embodiments, the base and edit embeddings may comprise vector representations of the base and edit prompts, respectively.

In some embodiments, the steps of obtaining the base and edit prompts and converting them to embeddings may only be performed once per edit.

In some embodiments, the weight may be dependent on the time step such that the base embeddings have a greater weight at earlier time steps than at later time steps.

In some embodiments, the converting of the base and edit prompts to the base and edit embeddings may involve converting the base and edit prompts to base and edit tokens via a tokenizer unit and converting the base and edit tokens to base and edit embeddings via a text encoder unit.

In some embodiments, the text encoder unit may be a contrastive language image pre-training (CLIP) text encoder.

In some embodiments, the edit latent may be converted to the edited image using a latent to image decoder.

In some embodiments, the mask vector and the index vector may be computed by a mask and alignment vector unit.

In some embodiments, the new edit embeddings may be determined by an embedding mixer unit which takes the base and edit embeddings, the time step and the weight as inputs and outputs the new edit embeddings.

In some embodiments, the cross-attention maps are generated by a cross-attention processor.

According to an embodiment of a second aspect there is disclosed herein a computer program which, when run on a computer, causes the computer to carry out a method comprising obtaining a base prompt indicating a base image and an edit prompt indicating an edit to be made to the base image. The method further comprising converting the base and edit prompts to base and edit embeddings, respectively. The method further comprising repeating, for a plurality of iterations, the steps of: (i) determining new edit embeddings based on: the base and edit embeddings, a time step relating to the iteration, and a weight dependent on the time step wherein the weight controls mixing of the base and edit embeddings; (ii) inputting the base embeddings into a diffusion model in a base reverse process arranged to update a base latent relating to the base image; and (iii) inputting the new edit embeddings into the diffusion model in an edit reverse process arranged to update an edit latent relating to an edited image, wherein cross-attention maps generated from the diffusion model in the base reverse process are input into the diffusion model in the edit reverse process. The method further comprising converting the edit latent to the edited image; and finally, outputting the edited image.

According to an embodiment of a third aspect there is disclosed herein an information processing apparatus comprising a memory and a processor connected to the memory, wherein the processor is configured to perform a method, the method comprising: obtaining a base prompt indicating a base image and an edit prompt indicating an edit to be made to the base image. The method further comprising converting the base and edit prompts to base and edit embeddings, respectively. The method further comprising repeating, for a plurality of iterations, the steps of: (i) determining new edit embeddings based on: the base and edit embeddings, a time step relating to the iteration, and a weight dependent on the time step wherein the weight controls mixing of the base and edit embeddings; (ii) inputting the base embeddings into a diffusion model in a base reverse process arranged to update a base latent relating to the base image; and (iii) inputting the new edit embeddings into the diffusion model in an edit reverse process arranged to update an edit latent relating to an edited image, wherein cross-attention maps generated from the diffusion model in the base reverse process are input into the diffusion model in the edit reverse process. The method further comprising converting the edit latent to the edited image; and finally, outputting the edited image.

In some embodiments, the memory and the processor are collectively configured to provide an embedding mixer arranged to perform the step of determining the new edit embeddings.

In some embodiments, the memory and the processor are collectively configured to provide the diffusion model.

In some embodiments, the memory and the processor are collectively configured to provide a cross-attention processor arranged to generate the cross-attention maps.

In some embodiments, the converting of the base and edit prompts to the base and edit embeddings involves converting the base and edit prompts to base and edit tokens and converting the base and edit tokens to base and edit embeddings; and wherein the memory and the processor are collectively configured to provide:

a tokenizer arranged to perform the step of converting the base and edit prompts to base and edit tokens; and
a text encoder arranged to perform the step of converting the base and edit tokens to base and edit embeddings.

In some embodiments, the new edit embeddings are further based on a mask vector and an index vector computed based on the base and edit tokens; and wherein the memory and the processor are collectively configured to provide a mask and alignment index vector module arranged to perform the step of computing a mask vector and an index vector based on the base and edit tokens.

Features relating to any aspect/embodiment may be applied to any other aspect/embodiment.

Brief Description of the Drawings

Embodiments of the invention will now be further described by way of example only and with reference to the accompanying drawings, wherein like reference numerals refer to like parts, and wherein:

Figure 1 is a diagram illustrating a stable diffusion model;

Figure 2 is a diagram illustrating a cross-attention mechanism;

Figure 3 is a diagram illustrating a comparative method;

Figure 4 is a diagram illustrating a comparative method;

Figure 5 is a diagram illustrating a comparative method;

Figure 6 is a diagram illustrating an embodiment of the invention;

Figure 7 is a diagram illustrating an embodiment of the invention;

Figure 8 shows examples illustrating a comparison of a comparative method (top row) and embodiments of the invention (bottom row);

Figure 9 shows examples illustrating a comparison of a comparative method (top row) and embodiments of the invention (bottom row);

Figure 10 is a diagram illustrating an embodiment of the invention;

Figure 11 is a diagram illustrating an embodiment of the invention;

Figure 12 is a flow chart illustrating an embodiment of the invention;

Figure 13 is a diagram illustrating an apparatus;

Figure 14 is a flow chart illustrating an embodiment of the invention; and

Figure 15 shows examples of base and edit images in accordance with embodiments of the invention.

Detailed Description

Text guided image editing refers to methods based on image generation models that make semantic changes to a given image based on textual instructions. This disclosure aims to provide a text guided image editor with improved control on the edit process (e.g. if editing a facial expression to a smile, controlling the amount of smile) and better preservation of the target identity (e.g. if editing a facial expression, preserving the subject's facial characteristics). This disclosure also aims to provide a text guided image editor which does not require training for each new edit, unlike existing methods which require training on a per edit basis. This disclosure provides these advantages by providing an embedding mixer which controls the entanglement of a base prompt (the prompt for the original image, e.g. "photo of a man") and an edit prompt (the prompt for the edited image, e.g. "photo of a smiling man").

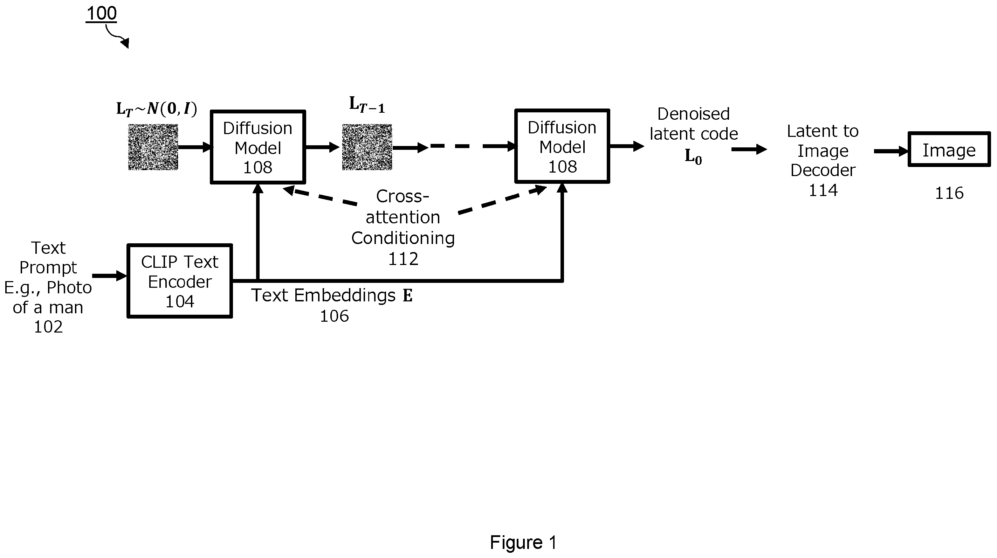

Figure 1 is a diagram illustrating a stable diffusion model 100. Diffusion models are state-of-the-art generative models that synthesize images from white Gaussian noise through progressive denoising with a $T$ step reverse diffusion process. In addition to high quality image generation, diffusion models have proven to be useful for text guided semantic image editing, e.g. changing facial expressions in an image. Several methods perform text guided image editing by finetuning the pre-trained unconditional diffusion models using contrastive language image pre-training (CLIP) based loss. However, these methods are computationally expensive due to the finetuning required. Stable diffusion is an open-source conditional text-to-image diffusion model that conditions the reverse diffusion process with CLIP embeddings $\mathbf{E}$ of the text prompt using the cross-attention mechanism. Referring to the Figure, a text prompt 102 (e.g. "photo of a man") is input into the CLIP Text Encoder 104 (via a tokenizer not shown) which outputs text embeddings $\mathbf{E}$ 106. The text embedding 106 is fed to the diffusion model 108 at every time step of the reverse process through the cross-attention mechanism 112. Specifically, the diffusion model in stable diffusion consists of 16 cross-attention layers. The $i^{th}$ cross-attention layer at $t^{th}$ diffusion step takes the input features $\mathbf{F}_t^i$ and modifies the features to $\hat{\mathbf{F}}_t^i$ by conditioning on the text embeddings $\mathbf{E}$. The latent code $\mathbf{L}_T \sim N(0, \mathbf{I})$ is progressively denoised to obtain the latent code $\mathbf{L}_0$ which is then decoded by a latent to image decoder 114 to get the image 116.

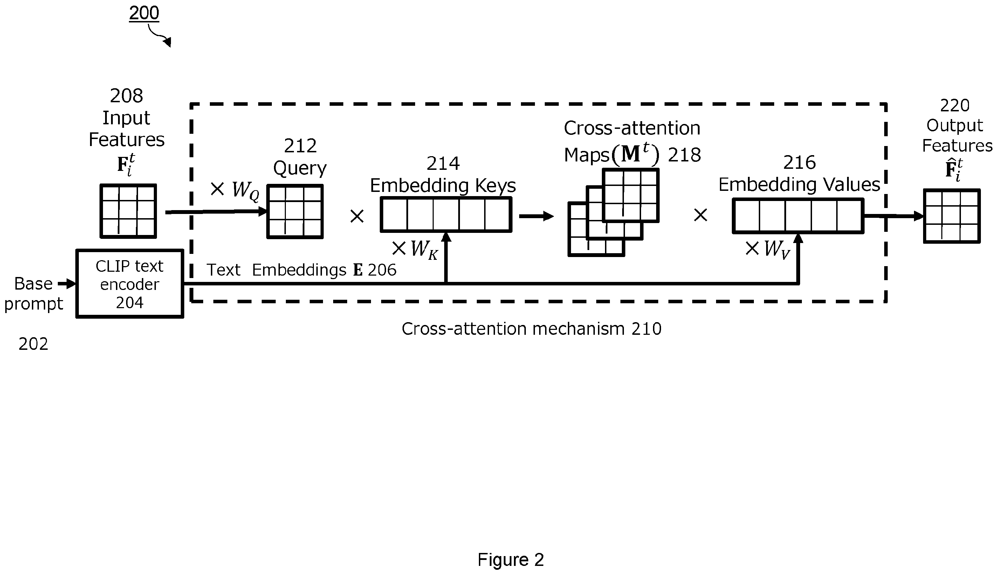

Figure 2 is a diagram illustrating a cross-attention mechanism 200. A cross-attention mechanism enables neural network models to selectively focus on relevant parts of one sequence based on information provided by another sequence. A cross-attention mechanism typically operates with three sets of input sequences: a "query" sequence and a "key" and a "value" sequence. These sequences can represent various types of data, such as words in a sentence, tokens in a document, or pixels in an image.

Referring to the Figure, a base prompt 202 is input into the CLIP Text Encoder 204 (via a tokenizer not shown) which outputs text embeddings **E** 206. Text embeddings 206 are used to obtain the key-value input sequence, while input features $\mathbf{F}_i^t$ 208 are used to obtain the query input sequence. Both inputs 208, 206 are input into the cross-attention mechanism 210. Each element in the query sequence is associated with a "query vector," 212 while each element in the key-value sequence is associated with both a "key vector" 214 and a "value vector" 216. These vectors are used to represent the semantic information of the input sequences. Specifically, the cross-attention mechanism 210 includes linear projection of the text embedding with $W_K$ and $W_V$ to get the key and value sequences respectively. The input features 206 are also linearly projected with $W_Q$ to get the query sequence. Then the attention weights are computed using a similarity measure, such as dot product or scaled dot product, between the query vectors and key vectors.

The attention weights can be visualized as cross-attention maps 218. These maps typically depict a grid where each row corresponds to elements in the query sequence, and each column corresponds to elements in the key-value sequence. The intensity or colour of each cell in the grid represents the magnitude of attention assigned to the corresponding pair of elements. The attention weights are used to compute a weighted sum of the value vectors in the key-value sequence to produce the final output features $\hat{\mathbf{F}}_i^t$ 220. This weighted sum represents the "attended" information from the value sequence that is relevant to each element in the query sequence. During training, the parameters of the cross-attention mechanism, including the $W_Q$, $W_K$ and $W_V$ weights, are learned through backpropagation using labelled data or other suitable training objectives. Cross-attention mechanisms allow models to effectively leverage contextual information from one sequence to enhance the processing of another sequence.

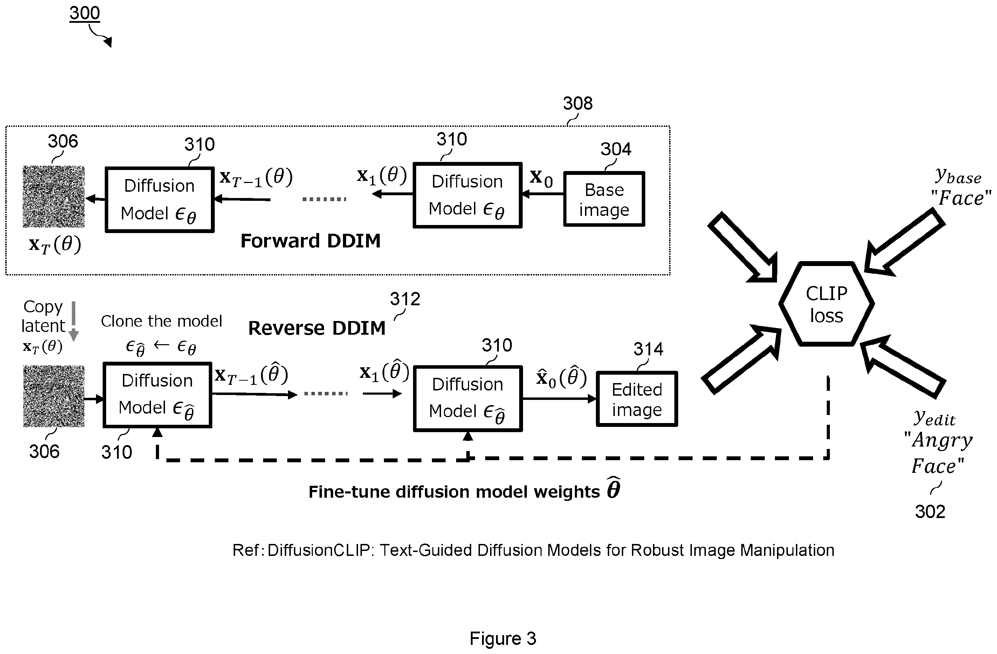

Figure 3 is a diagram illustrating a first comparative method 300 (comparative method 1). Comparative method 1 is a method for editing images using text prompts 302. The method finetunes an unconditional diffusion model for a desired edit by minimizing the CLIP based loss computed as the dissimilarity between CLIP text embedding of the edit prompt 302 and CLIP image embedding of the edited images. First, the base image 304 is inverted to the corresponding latent $\mathbf{x}_T$ 306 using the forward denoising diffusion implicit models (DDIM) process 308. Then the diffusion model 310 is finetuned so that the reverse DDIM process 312 applied on the latent $\mathbf{x}_T$ 306 gives the desired result (edited image 314). A problem with comparative method 1 is that it requires separate diffusion models to be trained for different types of edits which is time consuming and requires a lot of memory. The first comparative method may be referred to as DiffusionCLIP (Kim et al. 2022, "DiffusionCLIP: Text-Guided Diffusion Models for Robust Image Manipulation").

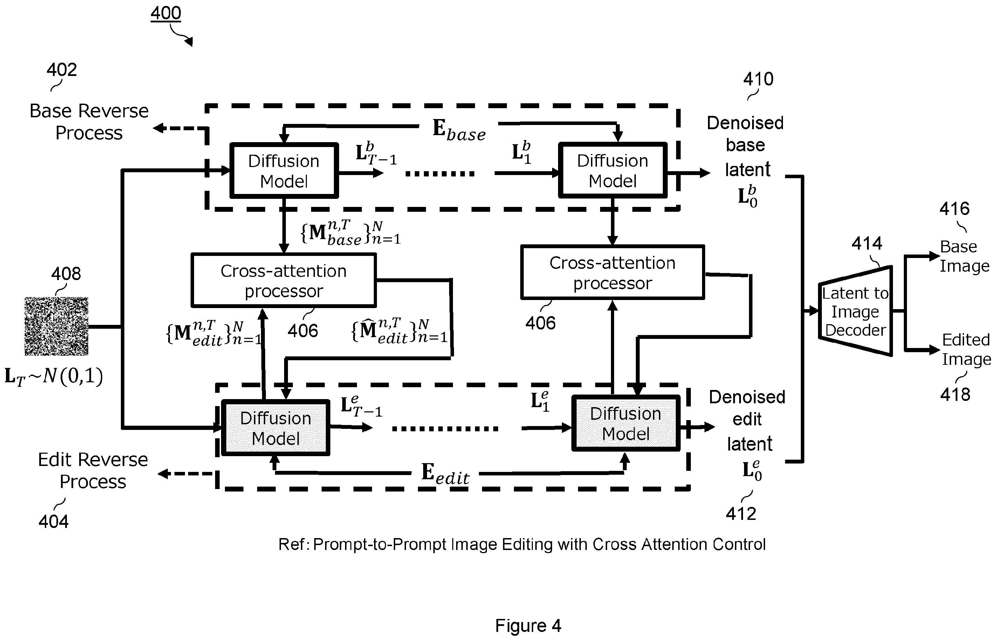

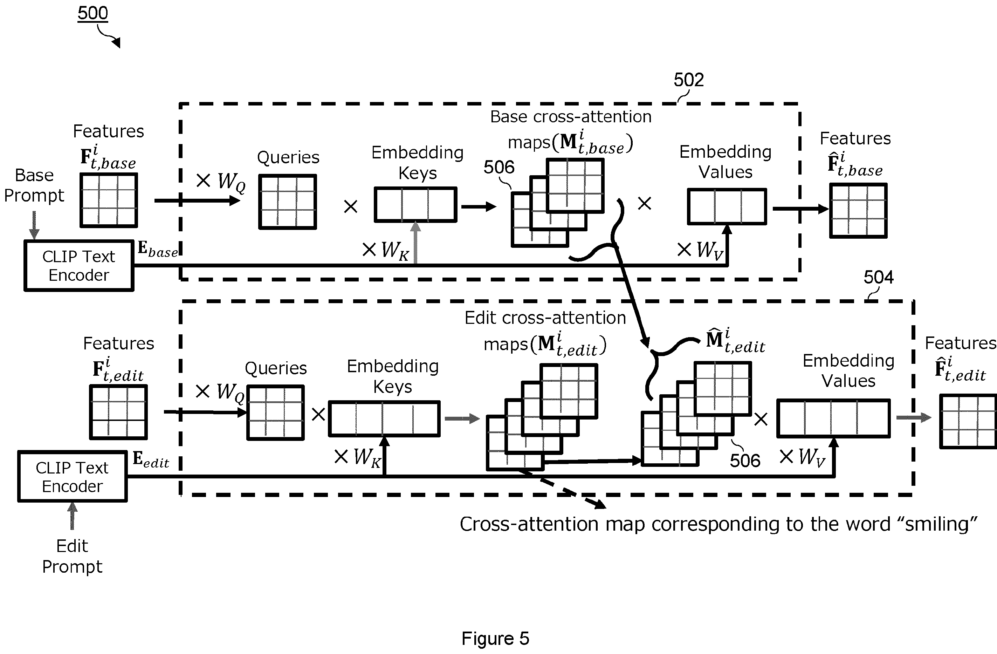

Figures 4 and 5 illustrate a second comparative method 400, 500 (comparative method 2). Comparative method 2 is a method for editing images using text prompts using cross-attention maps to control the editing. Unlike comparative method 1, comparative method 2 does not require training for individual edits, i.e. the model does not need to be finetuned for different edits.

As shown in Figure 4, in comparative method 2, two reverse processes, the base reverse process 402 for the base prompt and the edit reverse process 404 for the edit prompt, are conducted simultaneously. During the process, for the overlapping part of the text prompt, at every step t, the edit reverse process 404 uses the cross-attention maps generated by cross-attention processor 406 from the base reverse process 402. E.g., Base prompt: Photo of man, Edit prompt: Photo of *smiling* man. In the edit reverse process, the cross-attention maps for the words "Photo", "of", "man" are taken from the base prompt, while map for the word "smiling" is computed in the edit reverse process itself. In more detail, latent 408 is input into both the base reverse process 402 and the edit reverse process 404. The base reverse process 402 produces denoised base latent 410 using the base embeddings $\mathbf{E}_{base}$. Simultaneously, the edit reverse process 404 produces denoised edit latent 412 using the edit embeddings $\mathbf{E}_{edit}$. Cross-attention maps generated from the base reverse process 402 are input into the edit reverse process 404. The denoised base latent 410 is input into the latent to image decoder 414 to produce base image 416. The denoised edit latent 412 is input into the latent to image decoder 414 to produce edit image 418.

Figure 5 illustrates the cross-attention mechanism for comparative method 2. The base cross-attention process 502 works in the same way as the cross-attention mechanism described in relation to Figure 2 above. The edit cross-attention process 504 works similarly to the base cross-attention process 502, except for the additional input of the base cross-attention maps 506 which are generated from the base reverse process and input into the edit reverse process.

A problem with comparative method 2 is that it has problems with changing a subject's identity. Contextual encoding by the text encoder causes the edit instruction to affect other word embeddings from the edit prompt. For example, in the above case, the embedding of the word "man" is different in $\mathbf{E}_{base}$ and $\mathbf{E}_{edit}$ as the word "smiling" changes its embedding due to contextual embedding by the CLIP text encoder. This can negatively affect the subject's identity. A further problem with comparative method 2 is that it is difficult to control the edit strength. Comparative method 2 proposes to control the strength of the edit by scaling the cross-attention map corresponding to the edit phrase (e.g. scaling cross-attention map of the word "smiling" in the above example). However, this is not very effective as now embeddings of other words in $\mathbf{E}_{edit}$ also encode the "smiling" attribute due to contextual encoding. The second comparative method may be referred to as Prompt-to-Prompt (Hertz et al. 2022, "Prompt-to-Prompt Image Editing with Cross-Attention Control").

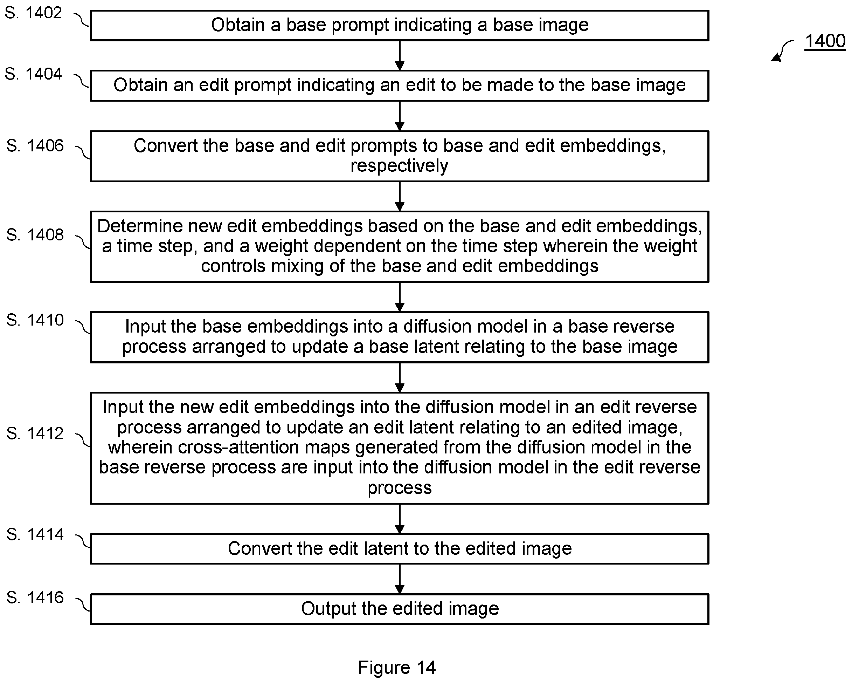

Figure 14 is a flow chart illustrating method steps in a computer-implemented method 1400 for generating an edited image in accordance with some embodiments of the invention. At step 1402, a base prompt indicating a base image is obtained. The base prompt may be obtained from an existing image and/or a user input. The base prompt may comprise a textual description relating to the base image. At step 1404, an edit prompt indicating an edit to be made to the base image is obtained. The edit prompt may be obtained from a user input. The edit prompt may comprise a textual description relating to the edited image. At step 1406, the base and edit prompts are converted to base $\mathbf{E}_{base}$ and edit $\mathbf{E}_{edit}$ embeddings, respectively. At step 1408, new edit embeddings $\hat{\mathbf{E}}_{edit}(t)$ are determined based on the base and edit embeddings, a time step t, and a weight dependent on the time step $w_e(t)$, wherein the weight controls mixing of the base and edit embeddings. For example, the weight may be dependent on the time step such that at earlier time steps, the base and edit embeddings mix less than at later time steps. The weight may be further dependent on a time invariant parameter which controls how much the base and edit embeddings mix. This time invariant parameter is referred to herein as hyperparameter $\sigma_e$. At step 1410, the base embeddings are input into a diffusion model in a base reverse process arranged to update a base latent relating to the base image. At step 1412, the new edit embeddings are input into the diffusion model in an edit reverse process arranged to update an edit latent relating to an edited image, wherein cross-attention maps generated from the diffusion model in the base reverse process are input into the diffusion model in the edit reverse process. Steps 1410 and 1412 may overlap in time, for example, they may occur simultaneously. At step 1414, the edit latent is converted to the edited image. At step 1416, the edited image is output, e.g. to a user. This could be in the form of displaying the edited image to the user, e.g. via a Graphical User Interface (GUI).

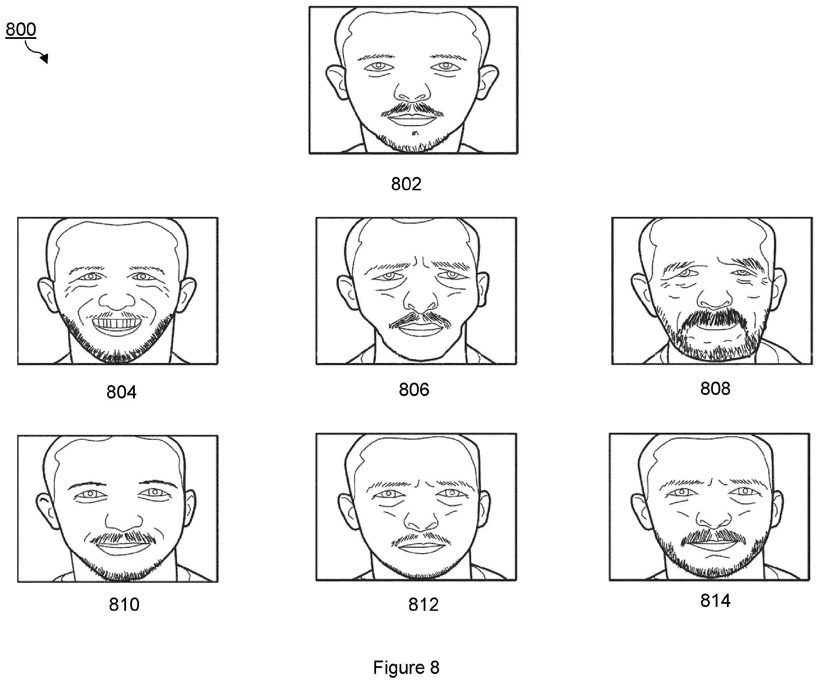

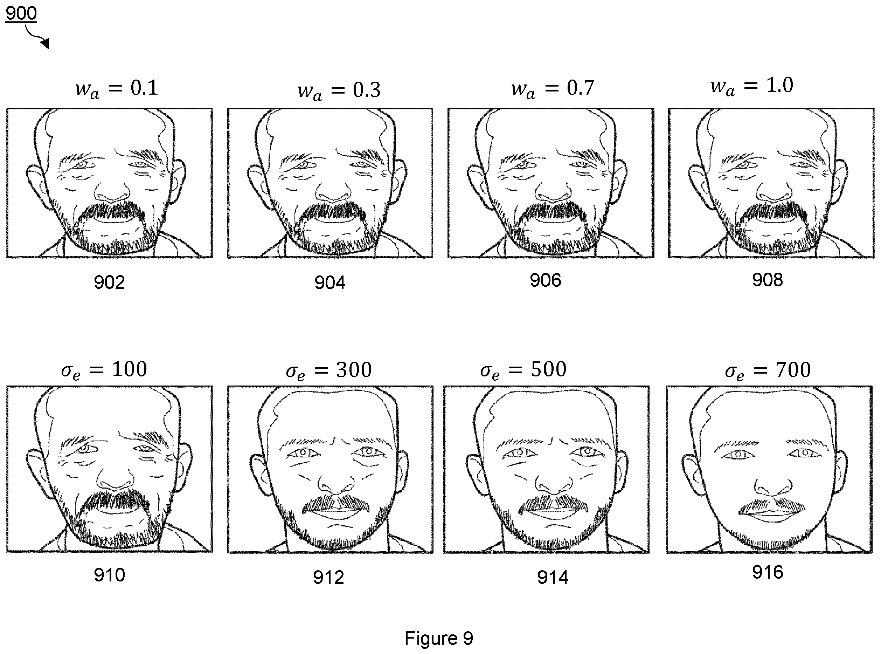

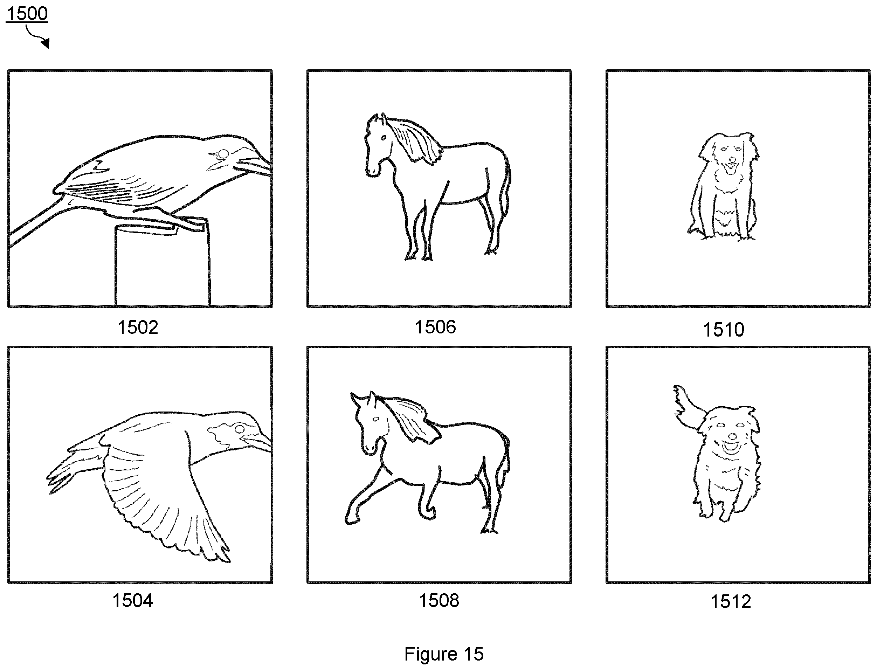

Embodiments of the invention may work on an image of any subject. For example, the base image may comprise an image of a human face. In such an example, the edit may comprise a change in facial expression of the human face. In other examples, the edit may comprise a change in the facial characteristics and/or age of the human face. Examples of editing images of human faces are shown in Figures 8 and 9 and described below. Examples 1500 of editing images of animals are shown in Figure 15 which shows an image of a bird 1502 which is edited to show an image of a *flying* bird 1504. Figure 15 also shows an image of a horse 1506 which is edited to show an image of a *running* horse 1508. Figure 15 also shows an image of a dog 1510 which is edited to show an image of a *running* dog 1512. As such, the edit may comprise a change in what the subject of the image is doing. An edit may comprise a change to the background of an image.

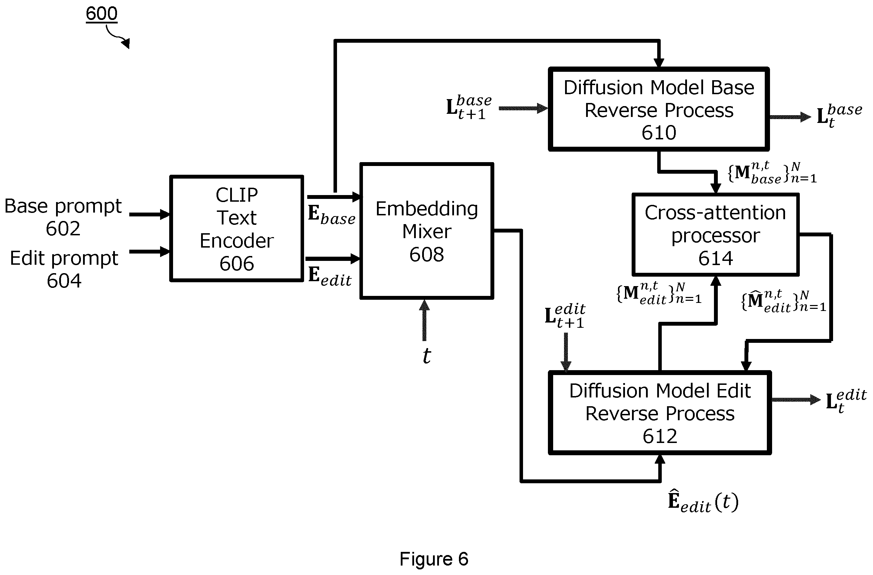

Figure 6 illustrates embodiments of the invention 600, in particular, the $t^{th}$ diffusion step of the method of the disclosure. The method is similar to the Prompt-to-Prompt method discussed in relation to Figures 4 and 5, but with the introduction of an embedding mixer module. The embedding mixer addresses the problem of the edit words (e.g. "smiling") affecting embedding of other words in the edit prompt (e.g. "man"). Referring to the Figure, method 600 comprises inputting a base prompt 602 (e.g. "photo of a man") and an edit prompt 604 (e.g. "photo of a *smiling* man") into the CLIP text encoder 606 (via a tokenizer not shown) which outputs base embeddings $\mathbf{E}_{base}$ and the edit embeddings $\mathbf{E}_{edit}$. Base embeddings $\mathbf{E}_{base}$ and edit embeddings $\mathbf{E}_{edit}$ are input into the embedding mixer 608, along with timestep t as the embedding mixer output is timestep dependent. The embedding mixer 608 outputs new, timestep $t$ dependent, edit embeddings $\hat{\mathbf{E}}_{edit}(t)$. Base embeddings $\mathbf{E}_{base}$ are also input into a diffusion model in a base reverse process 610 which acts on the base latent $\mathbf{L}_{t+1}^{base}$ to produce $\mathbf{L}_{t}^{base}$ (i.e. the original unedited image in latent space). Meanwhile, new edit embeddings $\hat{\mathbf{E}}_{edit}(t)$ are input into the diffusion model in an edit reverse process 612 which acts on the edit latent $\mathbf{L}_{t+1}^{edit}$ to produce $\mathbf{L}_{t}^{edit}$ (i.e. the edited image in latent space). The cross-attention processor 614 acts between the two reverse processes 610, 612 as described above in relation to Figures 2 and 5, which allows the process of obtaining the original unedited image to inform the process of obtaining the edited image. The cross-attention processor 614 takes cross-attention maps $\{\mathbf{M}_{base}^{n,t}\}_{n=1}^{N}$ from the base reverse process 610 and cross-attention maps $\{\mathbf{M}_{edit}^{n,t}\}_{n=1}^{N}$ from the edit reverse process 612 and outputs modified cross-attention maps $\{\hat{\mathbf{M}}_{edit}^{n,t}\}_{n=1}^{N}$ as output which are then input back into the edit reverse process 612.

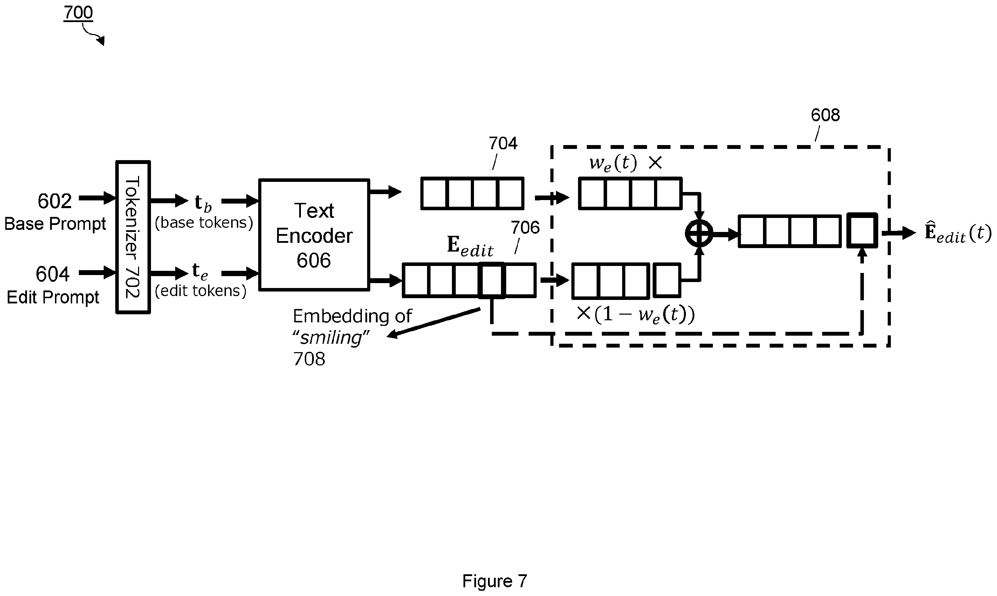

Figure 7 illustrates the embedding mixer 608 in more detail 700. Referring to the Figure, the base prompt, e.g. "photo of a man" 602 and the edit prompt, e.g. "photo of a *smiling* man" 604 are input into the tokenizer 702 which outputs base tokens $\mathbf{t}_b$ and edit tokens $\mathbf{t}_e$, respectively. The tokens are then input into the text encoder 606 which outputs the base embeddings $\mathbf{E}_{base}$ 704 and the edit embeddings $\mathbf{E}_{edit}$ 706. The embedding of the edit word *"smiling"* is shown as 708. The embeddings 704 and 706 are input into the embedding mixer 608 as described above with reference to Figure 6. The mixing is done through convex combination of the embeddings of the overlapping parts of the base and the text prompt

using the weights $w_e(t)$. These weights are designed to emphasize the base embeddings for the initial steps of the reverse diffusion process and edit embeddings for the later part of the process. As initial time steps of the reverse diffusion process affect the higher-level features of the image (e.g. facial structure if the image is of a face), this ensures that only the base embeddings are used to affect these higher-level features to maintain the identity of the subject. Later time steps of the reverse diffusion process affect the lower-level features (i.e. finer details) of the image (e.g. facial expression if the image is of a face). By including the edit embeddings later in the process, this ensures that the edit embeddings only effect the finer details of the image and do not completely alter the subject of the image. Then, the embeddings specifying the desired edit is concatenated to the mixed embeddings. Since the base embeddings are not entangled with the edit embeddings, the problems associated with the entanglement are mitigated. Because the context in the edit prompt is also important, the mixing is done instead of replacing the embeddings.

The new edit embeddings $\hat{\mathbf{E}}_{edit}(t)$ may be expressed as:

$$\hat{\mathbf{E}}_{edit}(t) = \mathbf{m} * w_e(t) * \mathbf{E}_{base}[\mathbf{i}] + \mathbf{m} * (1 - w_e(t)) * \mathbf{E}_{edit} + (1 - \mathbf{m}) * \mathbf{E}_{edit}$$

Where $\mathbf{i}$ is an index vector to align same tokens in $\mathbf{t}_b$ with $\mathbf{t}_e$. It is computed by comparing $\mathbf{t}_b$ and $\mathbf{t}_e$; $\mathbf{m}$ is a binary mask that takes the value of 1 for the same tokens in $\mathbf{t}_b[\mathbf{i}]$ and $\mathbf{t}_e$; and $w_e(t) = \exp\left(-\frac{(t-T)^2}{2\sigma_e^2}\right)$ where $T$ is the total number of timesteps in reverse process, and $\sigma_e$ is the hyperparameter to control embedding mixing, where a lower hyperparameter value results in a stronger edit result.

Figure 8 shows an example comparison 800 of Prompt-to-Prompt results 804-808 (top row) and the method of the disclosure 810-814 (bottom row). For both methods, an original image 802 created with the base prompt "photo of a man" has been edited by the edit prompts "photo of a *smiling* man", "photo of a *crying* man" and "photo of an *old* man". The result of the Prompt-to-Prompt method for the "photo of a *smiling* man" edit can be seen in image 804. The result of the Prompt-to-Prompt method for the "photo of a *crying* man" edit can be seen in image 806. The result of the Prompt-to-Prompt method for the "photo of an *old* man" edit can be seen in image 808. The result of the method of the disclosure for the "photo of a *smiling* man" edit can be seen in image 810. The result of the method of the disclosure for the "photo of a *crying* man" edit can be seen in image 812. The result of the method of the disclosure for the "photo of an *old* man" edit can be seen in image 814. For the method of the disclosure, all three of these results were generated using hyperparameter value $\sigma_e = 500$. It can be seen from these results that the result of the Prompt-to-Prompt method can change the identity of the subject. For example, the result for the "photo of a *smiling* man" 804 looks older than the base image 802. The embedding of "smiling" has had unintended effects on the age of the subject. Similarly, the result for the "photo of a *crying* man" 806 has a different facial structure to base image 802. The embedding of "crying" has had unintended effects on the facial structure of the subject. In contrast, the results for the method of the disclosure 810, 812, 814 have much more realistic results and it is clear that the person in the edited images 810, 812, 814 is the same as the person in the base image 802.

Figure 9 shows an example comparison 900 of Prompt-to-Prompt results 902-908 (top row) and the method of the disclosure 910-916 (bottom row). In the top row, the images 902-908 show the test of controllability in the Prompt-to-Prompt approach by varying weight of the cross-attention map corresponding to the word "*old*". Image 902 has $w_a = 0.1$, image 904 has $w_a = 0.3$, image 906 has $w_a = 0.7$ and image 908 has $w_a = 1.0$. This approach was proposed in the Prompt-to-Prompt paper. As can be seen in the images 902-908, this is not a robust way to control the degree of the edit (e.g. control how old the man appears) and may fail for certain images as shown. In contrast, in the bottom row, the images 910-916 show the test of controllability for the method of the disclosure by varying the hyperparameter $\sigma_e$ which controls the mixing of the embeddings. As can be seen in the images 910-916, the editing strength can be effectively controlled using this method, where lower hyperparameter values (e.g. 100) result in a stronger edit (e.g. an older looking man) and higher hyperparameter values (e.g. 700) result in a weaker edit (e.g. a younger looking man). The example hyperparameter values shown in Figure 9 are $\sigma_e = 100$ for image 910, $\sigma_e = 300$ for image 912, $\sigma_e = 500$ for image 914, and $\sigma_e = 700$ for image 916.

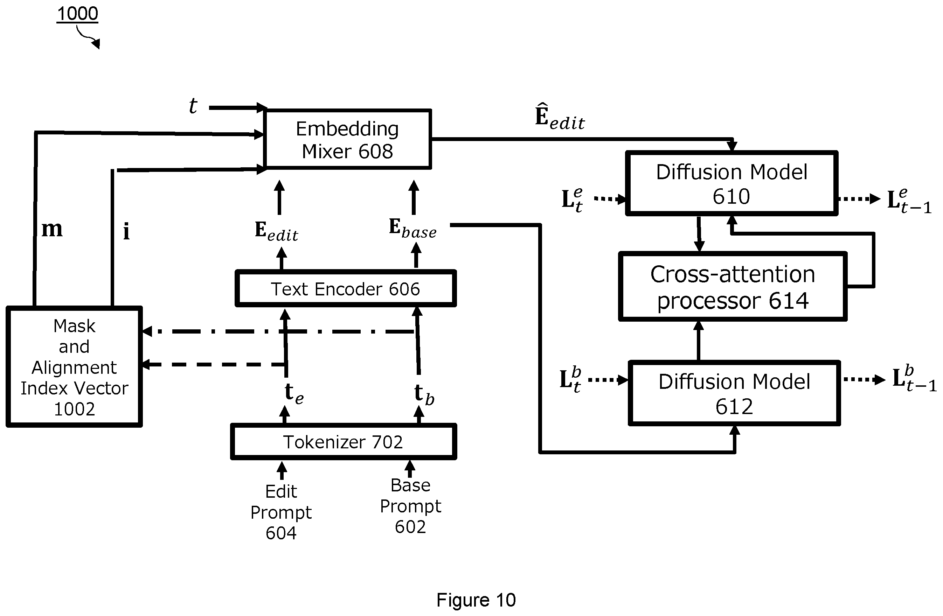

Figure 10 illustrates embodiments of the invention in more detail 1000. The edit prompt 604 and the base prompt 602 are input into tokenizer 702 which outputs edit tokens $\mathbf{t}_e$ and base tokens $\mathbf{t}_b$, respectively. The tokens are then input into the text encoder 606 which outputs the base embeddings $\mathbf{E}_{base}$ and the edit embeddings $\mathbf{E}_{edit}$. Mask and alignment index vector 1002 is a component used to align the tokens of the base and edit prompts. It takes tokens $\mathbf{t}_b$, $\mathbf{t}_e$ as input and outputs $\mathbf{m}$ and $\mathbf{i}$, where $\mathbf{i}$ is an index vector to align same tokens in $\mathbf{t}_b$ with $\mathbf{t}_e$ computed by comparing $\mathbf{t}_b$ and $\mathbf{t}_e$ and $\mathbf{m}$ is a binary mask that takes the value of 1 for the same tokens in $\mathbf{t}_b[\mathbf{i}]$ and $\mathbf{t}_e$ (as defined above in relation to Figure 7). The embeddings $\mathbf{E}_{base}$, $\mathbf{E}_{edit}$ are input into the embedding mixer 608 as described above with reference to Figures 6 and 7 along with timestep $t$, $\mathbf{m}$ and $\mathbf{i}$. As described above, the embedding mixer 608 outputs new, timestep $t$ dependent, edit embeddings $\hat{\mathbf{E}}_{edit}(t)$. The diffusion model 610, 612 and the cross-attention processor 614 have been described above in relation to Figure 6.

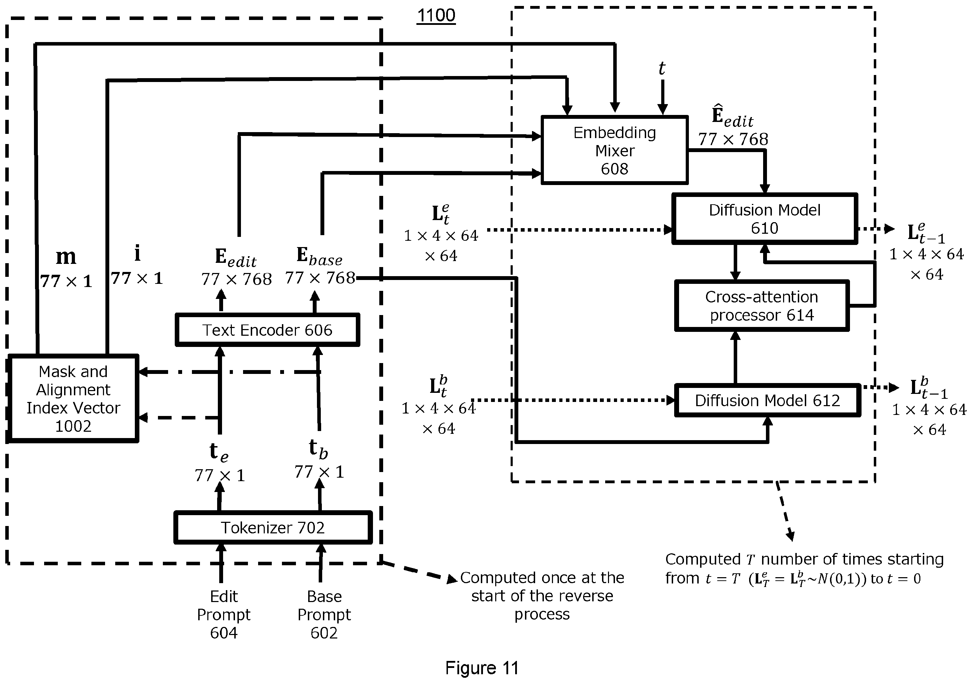

Figure 11 illustrates embodiments of the invention in more detail 1100. Figure 11 illustrates how the tokenizer 702, mask and alignment index vector 1002 and text encoder 606 steps (described above) are computed once at the start of the reverse process. The embedding mixer 608, diffusion model 610, 612 and cross-attention processor 614 steps are computed $T$ number of times starting from $t = T$ ( $\mathbf{L}_T^e = \mathbf{L}_T^b \sim N(0,1)$ ) to $t = 0$. In Figure 11, the matrices and tensors are annotated with their dimensions, e.g. $\mathbf{t}_b$ has dimensions 77 x 1.

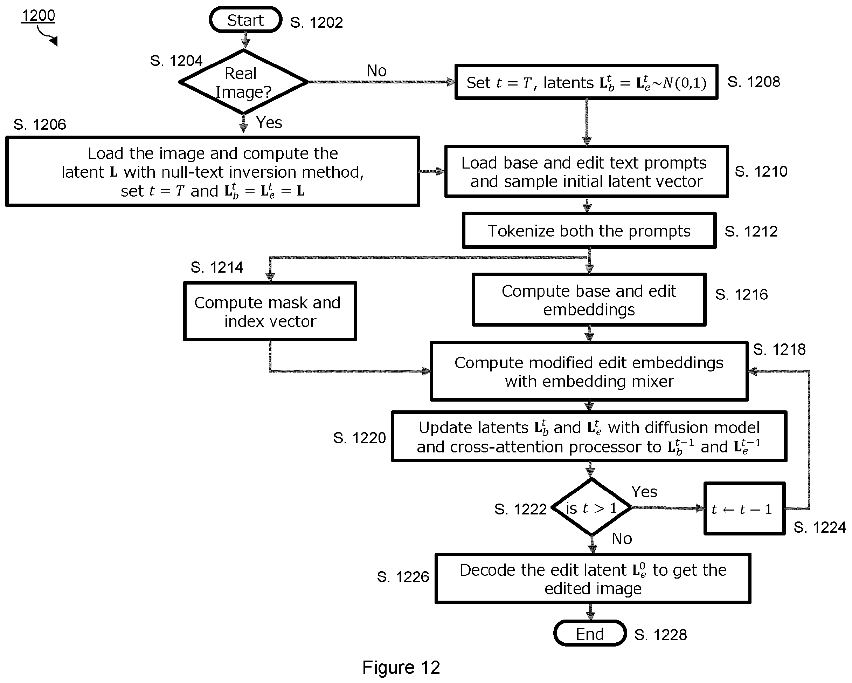

Figure 12 is a flow chart 1200 illustrating embodiments of the invention. At step 1202, the method starts. At step 1204, the method checks if there is a real base image to be edited. Embodiments of the invention can work from a real image and work backwards to produce a suitable prompt which would give that real image, or a user may provide a prompt from which to generate the base image. If there is a real image, the method progresses to step 1206 where the real image is loaded and the latent $\mathbf{L}$ is computed with a null-text inversion method and $t$ is set $t = T$ and base latent $\mathbf{L}_b^t$ is set $\mathbf{L}_b^t = \mathbf{L}_e^t = \mathbf{L}$. Alternatively, if there is no real image, the method progresses to step 1208 where the method sets $t = T$, and latents $\mathbf{L}_b^t = \mathbf{L}_e^t \sim N(0,1)$. After step 1206 or step 1208 the method progresses to step 1210 where the base 602 and edit 604 prompts are loaded, along with the sample initial latent vector. The sample initial latent vector is the latent vector $L^T$, the starting point of the reverse diffusion process. It is the same for both base and reverse processes. The edit prompt 604 may be provided by a user. At step 1212 both the base and edit prompts are tokenized by tokenizer 702 to produce base tokens $\mathbf{t}_b$ and edit tokens $\mathbf{t}_e$. At step 1214 the mask vector $\mathbf{m}$ and index vector $\mathbf{i}$ are computed by mask and alignment index vector 1002. At step 1216 the base $\mathbf{E}_{base}$ and edit $\mathbf{E}_{edit}$ embeddings are computed by text encoder 606. At step 1218 the modified edit embeddings $\hat{\mathbf{E}}_{edit}$ are computed with the embedding mixer 608. At step 1220 latents $\mathbf{L}_b^t$ and $\mathbf{L}_e^t$ are updated with the base and edit reverse processes of the diffusion model 610, 612 and cross-attention processor 614 to $\mathbf{L}_b^{t-1}$ and $\mathbf{L}_e^{t-1}$. At step 1222, the method checks if timestep $t > 1$ (i.e. checks if this is the last timestep of the process). If $t > 1$ (i.e. it is not the last timestep), the method proceeds to step 1224 which sets $t \leftarrow t - 1$ (i.e. changes $t$ to the next timestep) and then repeats steps 1218-1222. If $t < 1$ (i.e. it is the last timestep), the method proceeds to step 1226 where the edit latent $\mathbf{L}_e^0$ is decoded to get the edited image. At step 1228 the method ends.

The method disclosed herein provides an improved text guided image editing method by providing an embedding mixer to better control the editing process.

Text guided image editing may be used for any number of downstream tasks. Text guided image editing is advantageous as it provides a user-friendly and intuitive way to create or modify images without requiring expertise in graphic design or image editing software. Users can input text descriptions instead of manually manipulating image elements, making it accessible to a broader range of individuals. Text-to-image editing can be faster than traditional methods, especially for generating multiple variations of an image. Users can quickly describe their desired changes, and the software can generate or edit the image accordingly, saving time and effort. Text-to-image editing can automate repetitive tasks and streamline workflows by generating images based on textual descriptions. Additionally, it enables customization, as users can specify precise details or preferences in their text inputs.

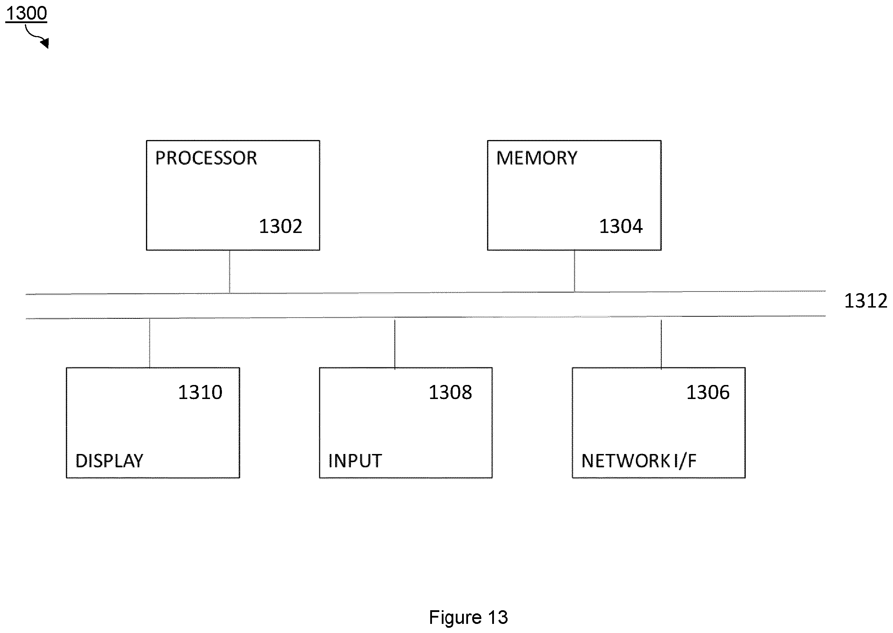

Figure 13 is a block diagram of an information processing apparatus 1300 or a computing device 1300, such as a data storage server, which embodies the present invention, and which may be used to implement some or all of the operations of a method embodying the present invention, and perform some or all of the tasks of apparatus of an embodiment. The computing device 1300 may be used to implement any of the method steps described above, e.g. any of steps S. 1402 - S.1416, and/or any processes described above.

The computing device 1300 comprises a processor 1302 and memory 1304. Optionally, the computing device also includes a network interface 1306 for communication with other such computing devices. Optionally, the computing device also includes one or more input mechanisms such as keyboard and mouse 1308, and a display unit such as one or more monitors 1310. These elements may facilitate user interaction. The components are connectable to one another via a bus 1312.

The memory 1304 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps disclosed herein, e.g. any of steps S. 1402 - S. 1416, and/or any processes described above. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 1302 is configured to control the computing device and execute processing operations, for example executing computer program code stored in the memory 1304 to implement any of the method steps described herein. The memory 1304 stores data being read and written by the processor 1302 and may store data, described above, and/or programs for executing any of the method steps and/or processes described above. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 1302 may be considered to comprise any of the modules described above. Any operations described as being implemented by a module may be implemented as a method by a computer and e.g. by the processor 1302.

The memory 1304 and the processor 1302 may be collectively configured to provide an embedding mixer 608 arranged to perform the step of determining the new edit embeddings (S. 1408). The memory 1304 and the processor 1302 may be collectively configured to provide the diffusion model. The memory 1304 and the processor 1302 may be collectively configured to provide a cross-attention processor 614 arranged to generate the cross-attention maps. The memory 1304 and the processor 1302 may be collectively configured to provide a tokenizer 702 arranged to convert the base and edit prompts to base and edit tokens and a text encoder 606 arranged to convert the base and edit tokens to base and edit embeddings. The memory 1304 and the processor 1302 may be collectively configured to provide a mask and alignment index vector module 1002 arranged to compute a mask vector and an index vector based on the base and edit tokens.

The display unit 1310 may display a representation of data stored by the computing device, enabling a user to interact with the apparatus 1300 by e.g. drag and drop or selection interaction, and/or any other output described above, and may also display a cursor and dialog boxes and screens enabling interaction between a user and the programs and data stored on the computing device. The input mechanisms 1308 may enable a user to input data and instructions to the computing device, such as enabling a user to input any user input described above.

The network interface (network I/F) 1306 may be connected to a network, such as the Internet, and is connectable to other such computing devices via the network.

The network I/F 1306 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device/apparatus 1300 such as that illustrated in Figure 13. Such a computing device need not have every component illustrated in Figure 13 and may be composed of a subset of those components. For example, the apparatus 1300 may comprise the processor 1302 and the memory 1304 connected to the processor 1302. Or the apparatus 1300 may comprise the processor 1302, the memory 1304 connected to the processor 1302, and the display 1310. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The above-described embodiments of the present invention may advantageously be used independently of any other of the embodiments or in any feasible combination with one or more others of the embodiments. While certain embodiments have been described, these embodiments have been presented by way of example only, and are not intended to limit the scope of the inventions. Indeed, the novel methods and apparatuses described herein may be embodied in a variety of other forms; furthermore, various omissions, substitutions and changes in the form of methods and apparatus described herein may be made. The scope of the invention is determined by the appended claims.

**Claims**

1. A computer-implemented method for image editing, the method comprising:

   obtaining a base prompt indicating a base image and an edit prompt indicating an edit to be made to the base image;
   converting the base and edit prompts to base and edit embeddings, respectively;
   repeating, for a plurality of iterations, the steps of:

   determining new edit embeddings based on: the base and edit embeddings, a time step relating to the iteration, and a weight dependent on the time step wherein the weight controls mixing of the base and edit embeddings;
   inputting the base embeddings into a diffusion model in a base reverse process arranged to update a base latent relating to the base image; and
   inputting the new edit embeddings into the diffusion model in an edit reverse process arranged to update an edit latent relating to an edited image, wherein cross-attention maps generated from the diffusion model in the base reverse process are input into the diffusion model in the edit reverse process; converting the edit latent to the edited image; and

   outputting the edited image.

2. The computer-implemented method of claim 1, wherein the weight is dependent on the time step such that: at earlier time steps, the base and edit embeddings mix less than at later time steps.

3. The computer-implemented method of claim 1 or claim 2, wherein the weight is further dependent on a time invariant parameter which controls how much the base and edit embeddings mix.

4. The computer-implemented method of any preceding claim, wherein the converting of the base and edit prompts to the base and edit embeddings involves converting the base and edit prompts to base and edit tokens and converting the base and edit tokens to base and edit embeddings.

5. The computer-implemented method of claim 4, wherein the new edit embeddings are further based on a mask vector and an index vector computed based on the base and edit tokens.

6. The computer-implemented method of any preceding claim, wherein the inputting of the base embeddings into the diffusion model in the base reverse process and the inputting of the new edit embeddings into the diffusion model in the edit reverse process overlap in time.

7. The computer-implemented method of any preceding claim, wherein the base prompt is derived from an image.

8. The computer-implemented method of any preceding claim, wherein the base prompt and/or the edit prompt are obtained from a user input.

9. The computer-implemented method of any preceding claim, wherein the base prompt comprises a textual description relating to the base image.

10. The computer-implemented method of any preceding claim, wherein the edit prompt comprises a textual description relating to the edited image.

11. The computer-implemented method of any preceding claim, wherein the base and edit embeddings comprise vector representations of the base and edit prompts, respectively.

12. The computer-implemented method of any preceding claim, wherein the steps of obtaining the base and edit prompts and converting them to embeddings is only performed once per edit.

13. The computer-implemented method of any preceding claim, wherein the weight is dependent on the time step such that the base embeddings have a greater weight at earlier time steps than at later time steps.

14. A computer program which, when run on a computer, causes the computer to carry out the computer-implemented method of any preceding claim.

15. An information processing apparatus comprising a memory and a processor connected to the memory, wherein the processor is configured to perform the computer-implemented method of any of claims 1 to 13.

**Patentansprüche**

1. Computerimplementiertes Verfahren zur Bildbearbeitung, wobei das Verfahren umfassend:

   Erhalten eines Basis-Prompts, der ein Basisbild angibt, und eines Bearbeitungs-Prompts, der eine an dem Basisbild vorzunehmende Bearbeitung angibt;
   Umwandeln der Basis- und Bearbeitungs-Prompts in Basis- bzw. Bearbeitungs-Einbettungen;
   Wiederholen, für eine Vielzahl von Iterationen, der Schritte:

   Bestimmen neuer Bearbeitungs-Einbettungen basierend auf: den Basis- und Bearbeitungs-Einbettungen, einem Zeitschritt, der sich auf die Iteration bezieht, und einer Gewichtung, die von dem Zeitschritt abhängig ist, wobei die Gewichtung das Mischen der Basis- und Bearbeitungs-Einbettungen steuert;
   Eingeben der Basis-Einbettungen in ein Diffusionsmodell in einem Basis-Rückwärtsprozess, der angeordnet ist, eine Basis-Latentdarstellung, die sich auf das Basisbild bezieht, zu aktualisieren; und
   Eingeben der neuen Bearbeitungs-Einbettungen in das Diffusionsmodell in einem Bearbeitungs-Rückwärtsprozess, der angeordnet ist, eine Bearbeitungs-Latentdarstellung, die sich auf ein bearbeitetes Bild bezieht, zu aktualisieren, wobei Kreuzaufmerksamkeitskarten, die aus dem Diffusionsmodell im Basis-Rückwärtsprozess erzeugt werden, in das Diffusionsmodell im Bearbeitungs-Rückwärtsprozess eingegeben werden; Umwandeln der Bearbeitungs-Latentdarstellung in das bearbeitete Bild; und
   Ausgeben des bearbeiteten Bildes.

2. Computerimplementiertes Verfahren nach Anspruch 1, wobei die Gewichtung derart von dem Zeitschritt abhängig ist, dass: bei früheren Zeitschritten die Basis- und Bearbeitungs-Einbettungen weniger mischen als bei späteren Zeitschritten.

3. Computerimplementiertes Verfahren nach Anspruch 1 oder Anspruch 2, wobei die Gewichtung ferner von einem zeitinvarianten Parameter abhängig ist, der steuert, wie stark die Basis- und Bearbeitungs-Einbettungen mischen.

4. Computerimplementiertes Verfahren nach einem der vorhergehenden Ansprüche, wobei das Umwandeln der Basis- und Bearbeitungs-Prompts in die Basis- und Bearbeitungs-Einbettungen das Umwandeln der Basis- und Bearbeitungs-Prompts in Basis- und Bearbeitungs-Token und das Umwandeln der Basis- und Bearbeitungs-Token in Basis- und Bearbeitungs-Einbettungen umfasst.

5. Computerimplementiertes Verfahren nach Anspruch 4, wobei die neuen Bearbeitungs-Einbettungen ferner auf einem Maskenvektor und einem Indexvektor basieren, die basierend auf den Basis- und Bearbeitungs-Token berechnet werden.

**6.** Computerimplementiertes Verfahren nach einem der vorhergehenden Ansprüche, wobei das Eingeben der Basis-Einbettungen in das Diffusionsmodell im Basis-Rückwärtsprozess und das Eingeben der neuen Bearbeitungs-Einbettungen in das Diffusionsmodell im Bearbeitungs-Rückwärtsprozess sich zeitlich überlappen.

**7.** Computerimplementiertes Verfahren nach einem der vorhergehenden Ansprüche, wobei der Basis-Prompt aus einem Bild abgeleitet ist.

**8.** Computerimplementiertes Verfahren nach einem der vorhergehenden Ansprüche, wobei der Basis-Prompt und/oder der Bearbeitungs-Prompt aus einer Benutzereingabe erhalten werden.

**9.** Computerimplementiertes Verfahren nach einem der vorhergehenden Ansprüche, wobei der Basis-Prompt eine Textbeschreibung umfasst, die sich auf das Basisbild bezieht.

**10.** Computerimplementiertes Verfahren nach einem der vorhergehenden Ansprüche, wobei der Bearbeitungs-Prompt eine Textbeschreibung umfasst, die sich auf das bearbeitete Bild bezieht.

**11.** Computerimplementiertes Verfahren nach einem der vorhergehenden Ansprüche, wobei die Basis- und Bearbeitungs-Einbettungen Vektordarstellungen der Basis- bzw. Bearbeitungs-Prompts umfassen.

**12.** Computerimplementiertes Verfahren nach einem der vorhergehenden Ansprüche, wobei die Schritte des Erhaltens der Basis- und Bearbeitungs-Prompts und des Umwandelns dieser in Einbettungen nur einmal pro Bearbeitung durchgeführt werden.

**13.** Computerimplementiertes Verfahren nach einem der vorhergehenden Ansprüche, wobei die Gewichtung derart von dem Zeitschritt abhängig ist, dass die Basis-Einbettungen bei früheren Zeitschritten eine größere Gewichtung aufweisen als bei späteren Zeitschritten.

**14.** Computerprogramm, das, wenn es auf einem Computer ausgeführt wird, den Computer veranlasst, das computerimplementierte Verfahren nach einem der vorhergehenden Ansprüche durchzuführen.

**15.** Informationsverarbeitungseinrichtung, umfassend einen Speicher und einen Prozessor, der mit dem Speicher verbunden ist, wobei der Prozessor konfiguriert ist, das computerimplementierte Verfahren nach einem der Ansprüche 1 bis 13 durchzuführen.

**Revendications**

**1.** Procédé mis en œuvre par ordinateur d'édition d'image, le procédé comprenant :

l'obtention d'une invite de base indiquant une image de base et une invite d'édition indiquant une modification à apporter à l'image de base ;
la conversion des invites de base et d'édition en intégrations de base et d'édition, respectivement ;
la répétition, pour une pluralité d'itérations, des étapes suivantes :

la détermination de nouvelles intégrations d'édition sur la base : des intégrations de base et d'édition, d'un pas de temps relatif à l'itération et d'un poids dépendant du pas de temps dans lequel le poids commande le mélange des intégrations de base et d'édition ;
l'entrée des intégrations de base dans un modèle de diffusion dans un processus inverse de base agencé pour mettre à jour un latent de base relatif à l'image de base ; et
l'entrée des nouvelles intégrations d'édition dans le modèle de diffusion dans un processus inverse d'édition agencé pour mettre à jour un latent d'édition relatif à une image éditée, dans lequel les cartes d'attention croisée générées à partir du modèle de diffusion dans le processus inverse de base sont entrées dans le modèle de diffusion dans le processus inverse d'édition ; la conversion du latent d'édition en l'image éditée ; et
la sortie de l'image éditée.

**2.** Procédé mis en œuvre par ordinateur selon la revendication 1, dans lequel le poids dépend du pas de temps de sorte que : à des pas de temps antérieurs, les intégrations de base et d'édition se mélangent moins qu'à des pas de temps ultérieurs.

3. Procédé mis en œuvre par ordinateur selon la revendication 1 ou la revendication 2, dans lequel le poids dépend également d'un paramètre invariant dans le temps qui commande la quantité de mélange des intégrations de base et d'édition.

4. Procédé mis en œuvre par ordinateur selon une quelconque revendication précédente, dans lequel la conversion des invites de base et d'édition en intégrations de base et d'édition implique la conversion des invites de base et d'édition en jetons de base et d'édition et la conversion des jetons de base et d'édition en intégrations de base et d'édition.

5. Procédé mis en œuvre par ordinateur selon la revendication 4, dans lequel les nouvelles intégrations d'édition sont également basées sur un vecteur de masque et un vecteur d'index calculés sur la base des jetons de base et d'édition.

6. Procédé mis en œuvre par ordinateur selon une quelconque revendication précédente, dans lequel l'entrée des intégrations de base dans le modèle de diffusion dans le processus inverse de base et l'entrée des nouvelles intégrations d'édition dans le modèle de diffusion dans le processus inverse d'édition se chevauchent dans le temps.

7. Procédé mis en œuvre par ordinateur selon une quelconque revendication précédente, dans lequel l'invite de base est dérivée d'une image.

8. Procédé mis en œuvre par ordinateur selon une quelconque revendication précédente, dans lequel l'invite de base et/ou l'invite d'édition sont obtenues à partir d'une entrée utilisateur.

9. Procédé mis en œuvre par ordinateur selon une quelconque revendication précédente, dans lequel l'invite de base comprend une description textuelle relative à l'image de base.

10. Procédé mis en œuvre par ordinateur selon une quelconque revendication précédente, dans lequel l'invite d'édition comprend une description textuelle relative à l'image éditée.

11. Procédé mis en œuvre par ordinateur selon une quelconque revendication précédente, dans lequel les intégrations de base et d'édition comprennent respectivement des représentations vectorielles des invites de base et d'édition.

12. Procédé mis en œuvre par ordinateur selon une quelconque revendication précédente, dans lequel les étapes d'obtention des invites de base et d'édition et de leur conversion en intégrations ne sont effectuées qu'une seule fois par édition.

13. Procédé mis en œuvre par ordinateur selon une quelconque revendication précédente, dans lequel le poids dépend du pas de temps de sorte que les intégrations de base présentent un poids plus important à des pas de temps antérieurs qu'à des pas de temps ultérieurs.

14. Programme informatique qui, lorsqu'il est exécuté par un ordinateur, amène l'ordinateur à mettre en œuvre le procédé mis en œuvre par ordinateur selon une quelconque revendication précédente.

15. Appareil de traitement d'informations comprenant une mémoire et un processeur connecté à la mémoire, dans lequel le processeur est configuré pour exécuter le procédé mis en œuvre par ordinateur selon l'une quelconque des revendications 1 à 13.

**Figure 1**

100

Text Prompt E.g., Photo of a man 102

CLIP Text Encoder 104

Text Embeddings $\mathbf{E}$ 106

$L_T \sim N(\mathbf{0}, \mathbf{I})$

Diffusion Model 108

$\mathbf{L_{T-1}}$

Diffusion Model 108

Cross-attention Conditioning 112

Denoised latent code $\mathbf{L_0}$

Latent to Image Decoder 114

Image 116

Figure 2

EP 4 625 334 B1

300

308

306 310 $\mathbf{x}_{T-1}(\theta)$ 310 $\mathbf{x}_1(\theta)$ 304

Diffusion Model $\epsilon_\theta$ $\mathbf{x}_0$ Diffusion Model $\epsilon_\theta$ Base image

$\mathbf{x}_T(\theta)$ **Forward DDIM**

$y_{base}$ "Face"

Copy latent $\mathbf{x}_T(\theta)$ Clone the model $\epsilon_{\hat\theta} \leftarrow \epsilon_\theta$ **Reverse DDIM** 312

310

$\mathbf{x}_{T-1}(\hat\theta)$ $\mathbf{x}_1(\hat\theta)$ $\hat{\mathbf{x}}_0(\hat\theta)$ 314

Diffusion Model $\epsilon_{\hat\theta}$ Diffusion Model $\epsilon_{\hat\theta}$ Edited image

CLIP loss

306 310

**Fine-tune diffusion model weights $\hat\theta$**

$y_{edit}$ "Angry Face"

302

Ref: DiffusionCLIP: Text-Guided Diffusion Models for Robust Image Manipulation

Figure 3

Ref: Prompt-to-Prompt Image Editing with Cross Attention Control

Figure 4

502

Base cross-attention
maps($\mathbf{M}_{t,base}^i$)

Features
$\mathbf{F}_{t,base}^i$

Base
Prompt

Queries

Embedding
Keys

506

Embedding
Values

Features
$\hat{\mathbf{F}}_{t,base}^i$

$\times W_Q$

$\times$

$\times$

CLIP Text
Encoder

$\mathbf{E}_{base}$

$\times W_K$

$\times W_V$

504

Edit cross-attention
maps($\mathbf{M}_{t,edit}^i$)

$\hat{\mathbf{M}}_{t,edit}^i$

Features
$\mathbf{F}_{t,edit}^i$

Queries

Embedding
Keys

Embedding
Values

Features
$\hat{\mathbf{F}}_{t,edit}^i$

$\times W_Q$

$\times$

506

$\times$

CLIP Text
Encoder

$\mathbf{E}_{edit}$

$\times W_K$

$\times W_V$

Edit
Prompt

Cross-attention map corresponding to the word "smiling"

Figure 5

EP 4 625 334 B1

18

$\mathbf{L}_{t+1}^{base} \rightarrow$ Diffusion Model Base Reverse Process 610 $\rightarrow \mathbf{L}_{t}^{base}$

Base prompt 602

Edit prompt 604

CLIP Text Encoder 606

$\mathbf{E}_{base}$

$\mathbf{E}_{edit}$

Embedding Mixer 608

$t$

$\{\mathbf{M}_{base}^{n,t}\}_{n=1}^{N}$

Cross-attention processor 614

$\{\mathbf{M}_{edit}^{n,t}\}_{n=1}^{N}$   $\{\widehat{\mathbf{M}}_{edit}^{n,t}\}_{n=1}^{N}$

$\mathbf{L}_{t+1}^{edit}$

Diffusion Model Edit Reverse Process 612 $\rightarrow \mathbf{L}_{t}^{edit}$

$\widehat{\mathbf{E}}_{edit}(t)$

600

Figure 6

Figure 7

EP 4 625 334 B1

Figure 8

900

$w_a = 0.1$      $w_a = 0.3$      $w_a = 0.7$      $w_a = 1.0$

902      904      906      908

$\sigma_e = 100$      $\sigma_e = 300$      $\sigma_e = 500$      $\sigma_e = 700$

910      912      914      916

Figure 9

Figure 10

Figure 11

1200

Start — S. 1202

S. 1204
Real Image? — No → Set $t = T$, latents $\mathbf{L}_b^t = \mathbf{L}_e^t \sim N(0,1)$ — S. 1208

Yes

S. 1206
Load the image and compute the latent $\mathbf{L}$ with null-text inversion method, set $t = T$ and $\mathbf{L}_b^t = \mathbf{L}_e^t = \mathbf{L}$

Load base and edit text prompts and sample initial latent vector — S. 1210

Tokenize both the prompts — S. 1212

S. 1214
Compute mask and index vector

Compute base and edit embeddings — S. 1216

Compute modified edit embeddings with embedding mixer — S. 1218

S. 1220
Update latents $\mathbf{L}_b^t$ and $\mathbf{L}_e^t$ with diffusion model and cross-attention processor to $\mathbf{L}_b^{t-1}$ and $\mathbf{L}_e^{t-1}$

S. 1222 — is $t > 1$ — Yes → $t \leftarrow t - 1$ — S. 1224

No

S. 1226
Decode the edit latent $\mathbf{L}_e^0$ to get the edited image

End — S. 1228

Figure 12

Figure 13

S. 1402 — | Obtain a base prompt indicating a base image |

*1400*

S. 1404 — | Obtain an edit prompt indicating an edit to be made to the base image |

S. 1406 — | Convert the base and edit prompts to base and edit embeddings, respectively |

S. 1408 — | Determine new edit embeddings based on the base and edit embeddings, a time step, and a weight dependent on the time step wherein the weight controls mixing of the base and edit embeddings |

S. 1410 — | Input the base embeddings into a diffusion model in a base reverse process arranged to update a base latent relating to the base image |

S. 1412 — | Input the new edit embeddings into the diffusion model in an edit reverse process arranged to update an edit latent relating to an edited image, wherein cross-attention maps generated from the diffusion model in the base reverse process are input into the diffusion model in the edit reverse process |

S. 1414 — | Convert the edit latent to the edited image |

S. 1416 — | Output the edited image |

Figure 14

1502

1506

1510

1504

1508

1512

Figure 15

## EP 4 625 334 B1

**Non-patent literature cited in the description**

- **HERTZ AMIR et al.** *Prompt-to-Prompt Image Editing with Cross Attention Control*, https://arxiv. org/pdf/2208.01626

- **SAHARIA CHITWAN et al.** *Photorealistic Text-to-Image Diffusion Models with Deep Language Understanding*, https://arxiv.org/ pdf/2205.11487